(19) Europäisches Patentamt
European Patent Office
Office européen des brevets

(11) Veröffentlichungsnummer: **0 495 224 B1**

(12) **EUROPÄISCHE PATENTSCHRIFT**

(45) Veröffentlichungstag der Patentschrift: **21.09.94**

(51) Int. Cl.5: **C08L 77/06**, C08K 3/02, //(C08L77/02,23:02,23:08)

(21) Anmeldenummer: **91121772.7**

(22) Anmeldetag: **19.12.91**

# (54) Flammgeschützte thermoplastische Formmassen.

(30) Priorität: **12.01.91 DE 4100740**

(43) Veröffentlichungstag der Anmeldung: **22.07.92 Patentblatt 92/30**

(45) Bekanntmachung des Hinweises auf die Patenterteilung: **21.09.94 Patentblatt 94/38**

(84) Benannte Vertragsstaaten: **AT BE CH DE ES FR GB IT LI NL**

(56) Entgegenhaltungen:
**EP-A- 0 092 776**
**EP-A- 0 255 901**
**EP-A- 0 287 955**
**EP-A- 0 303 031**

(73) Patentinhaber: **BASF Aktiengesellschaft**
**Carl-Bosch-Strasse 38**
**D-67063 Ludwigshafen (DE)**

(72) Erfinder: **Baierweck, Petra, Dr.**
**Sebastian-Kneipp-Strasse 19**
**W-6707 Schifferstadt (DE)**
Erfinder: **Gareiss, Brigitte, Dr.**
**Schillerstrasse 65**
**W-6700 Ludwigshafen (DE)**
Erfinder: **Plachetta, Christoph, Dr.**
**Danziger Strasse 1**
**W-6703 Limburgerhof (DE)**
Erfinder: **Beringer, Hans-Peter**
**Kreuzweg 45**
**W-6719 Carlsberg (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft flammgeschützte thermoplastische Formmassen, enthaltend

A) 10 bis 98,45 Gew.-% eines thermoplastischen Polyamids,

B) 1 bis 30 Gew.-% roten oder schwarzen Phosphor, welcher gegebenenfalls oberflächlich mit niedermolekularen flüssigen Substanzen oder mit Oligomeren oder polymeren Verbindungen beschichtet ist oder in der roten Modifikation als Konzentrat eingesetzt wird,

C) 0,5 bis 30 Gew.-% eines kautschukelastischen Polymerisates, mit der Maßgabe, daß die Komponente C) kein Olefinhomopolymerisat ist,

D) 0,05 bis 15 Gew.-% eines Polyethylens mit einer Dichte von 0,94 bis 0,98 g/cm$^3$ oder eines Polypropylens mit einem mittleren Molekulargewicht $\overline{M}_w$ von 100 000 bis 2 000 000 oder deren Mischungen

und

E) 0 bis 60 Gew.-% eines faser- oder teilchenförmigen Füllstoffes.

Außerdem betrifft die Erfindung die Verwendung dieser Formmassen zur Herstellung von Fasern, Folien und Formkörpern sowie die aus den erfindungsgemäßen Formmassen erhältlichen Formkörper.

Aus der DE-A 15 69 057 sind Gleitmaterialien aus einer kontinuierlichen Phase eines synthetischen Kunststoffes, z.B. Polyamid, mit diskret eingebetteten Teilchen eines Polyolefinpolymerisats bekannt.

Die Anwendung von Polyolefinhomopolymerisaten in flammgeschützten Formmassen verschlechtern die Flammschutzeigenschaften eines Polyamidformkörpers drastisch.

Zähmodifizierte Polyamidformkörper, die roten Phosphor als Flammschutzkomponente enthalten, weisen nicht zufriedenstellende Gleitreibungseigenschaften auf, die insbesondere die Anwendung für elektrische Bauteile einschränken, da durch den Abrieb die Funktion der Bauteile beeinträchtigt wird.

Aus der EP-A 92 776 ist ein Verfahren zur Flammschutzausrüstung von Polyamiden bekannt, wobei der Stabilisator in Form eines 10 bis 90 gew.-%igen Polyolefinkonzentrates in das Polyamid eingearbeitet wird, wobei das Polyolefin eine niedere Dichte aufweist.

Aus der EP-A 205 662 ist ein gecoateter (umhüllter) Phosphor bekannt, wobei die Umhüllung aus Polyethylen mit niederer Dichte besteht.

Die Polyethylenträgerharze sind allgemein schlecht verträglich mit dem Thermoplasten, wodurch eine Einarbeitung erschwert wird (Agglomeratbildung) und die geringe Phasenhaftung zu einer Verschlechterung der mechanischen Eigenschaften der daraus herstellbaren Formkörper führt.

Zusätzlich verschlechtert der rote Phosphor als teilchenförmiger Füllstoff die mechanischen Eigenschaften wie Abrieb von Polyamidformkörpern, so daß im Stand der Technik niedermolekulare Polyolefine oder Polyolefine niederer Dichte mit entsprechend geringen Kristallisationsgraden eingesetzt wurden, um die Mechanik durch hohe Kristallisationsanteile nicht weiter zu verschlechtern. Die Flammschutzeigenschaften dieser Formkörper sind darüber hinaus nicht zufriedenstellend.

Der vorliegenden Erfindung lag daher die Aufgabe zugrunde, flammgeschützte thermoplastische Polyamidformmassen zur Verfügung zu stellen, die ein gutes Brandverhalten bei gleichzeitig guten mechanischen, insbesondere guten Gleitreibungseigenschaften aufweisen.

Demgemäß wurden die eingangs definierten flammgeschützten Formmassen gefunden.

Bevorzugte Formmassen dieser Art und ihre Verwendung sind den Unteransprüchen zu entnehmen.

Als Komponente A) enthalten die erfindungsgemäßen Formmassen 10 bis 98,45, bevorzugt 15 bis 97,45 und insbesondere 20 bis 96 Gew.-% eines thermoplastischen Polyamids. Erfindungsgemäße Formmassen, die zusätzlich die Komponente E) enthalten, weisen einen Gehalt der Komponente A) von 10 bis 97,45, bevorzugt 10 bis 87,75 und insbesondere 15 bis 76 Gew.-% auf.

Die Polyamide der erfindinngsgemäßen Formmassen weisen im allgemeinen eine relative Viskosität $\eta_{rel}$ von 1,7 bis 5,0 auf, bestimmt in einer 1 gew.%igen Lösung in 96 gew.%iger Schwefelsäure bei 25°C, was einem K-Wert (nach Fikentscher) von 50 bis 96 entspricht. Polyamide mit einer relativen Viskosität von 2,3 bis 4,5, insbesondere von 2,5 bis 4,0 werden bevorzugt verwendet.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)-methan, Di-(4-aminocyclohexyl)-methan, 2,2-Di-(4-aminophenyl)-propan oder 2, 2-Di-(4-aminocyclohexyl)-propan.

Bevorzugte Polyamide sind Polyhexamethylenadipinsäureamid, Polyhexamethylensebacinsäureamid und Polycaprolactam.

Weiterhin sind Polyamide, die durch Copolymerisation zweier oder mehrerer der vorgenannten Monomeren erhältlich sind, oder Mischungen mehrerer Polyamide geeignet.

Beispielhaft erwähnt seien teilaromatische Copolyamide, insbesondere solche, deren Einheiten sich von Terephthalsäure und Hexamethylendiamin, von Adipinsäure und Hexamethylendiamin oder von Terephthalsäure, Hexamethylendiamin und $\epsilon$-Caprolactam ableiten. Insbesondere sind hierbei Copolyamide zu nennen, deren Triamingehalt (Gehalt an Bis-hexamethylentriamin) unter 0,5 Gew.% liegt. Entsprechende Produkte sind in Anlehnung an das in den EP-A 129 195 und 129 196 beschriebene Verfahren erhältlich.

Außerdem seien auch noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Die erfindinngsgemäßen Formmassen enthalten als Komponente (B) 1 bis 30 Gew.%, bevorzugt 1 bis 20 und insbesondere 2 bis 20 Gew.% roten oder schwarzen Phosphor. Enthalten die erfindinngsgemäßen Formmassen die Komponente E), weisen diese 1 bis 30, bevorzugt 1 bis 25 und insbesondere 2 bis 20 Gew.-% des phosphors B) auf.

Bevorzugtes Flammschutzmittel (B) ist elementarer roter Phosphor, insbesondere in Kombination mit glasfaserverstärkten Formmassen, der in unbehandelter Form eingesetzt werden kann.

Besonders eignen sich jedoch Zubereitungen, in denen der Phosphor oberflächlich mit niedermolekularen flüssigen Substanzen wie Silikonöl, Paraffinöl oder Estern der Phthalsäure oder Adipinsäure oder mit polymeren oder oligomeren Verbindungen, z.B. mit Phenolharzen oder Aminoplasten sowie Polyurethanen beschichtet sind.

Außerdem sind Konzentrate von rotem Phosphor, z.B. in einem Polyamid oder Elastomeren als Flammschutzmittel geeignet. Insbesondere eignen sich Polyolefinhomo- und -copolymere als Konzentratpolymere. Jedoch sollte der Anteil des Konzentratpolymeren nicht mehr als 35 Gew.% bezogen auf das Gewicht der Komponenten (A) und (B) in der erfindungsgemäßen Formmasse betragen.

Die mittlere Teilchengröße ($d_{50}$) der in den Formmassen verteilten Phosphorpartikel liegt bevorzugt im Bereich von 0,0001 bis 0,5 mm; insbesondere von 0,001 bis 0,2 mm.

Als Komponente (C) enthalten die erfindungsgemäßen thermoplastischen Formmassen 0,5 bis 30, vorzugsweise 0,5 bis 20 und insbesondere 1 bis 15 Gew.-% eines kautschukelastischen Polymerisats, bei füllstoffhaltigen Formmassen beträgt der Kautschukgehalt 0,5 bis 30, bevorzugt 1 bis 25 und insbesondere 1 bis 20 Gew.-%.

Bevorzugte kautschukelastische Polymerisate sind Polymerisate auf Basis von Olefinen, die aus folgenden Komponenten aufgebaut sind:

$c_1$) 40-100 Gew.-% mindestens eines $\alpha$-Olefins mit 2-8 C-Atomen

$c_2$) 0-50 Gew. -% eines Diens

$c_3$) 0-45 Gew.-% eines $C_1$-$C_{12}$-Alkylesters der Acrylsäure oder Methacrylsäure oder Mischungen derartiger Ester,

$c_4$) 0-40 Gew.-% einer ethylenisch ungesättigen Mono-oder Dicarbonsäure oder einem funktionellen Derivat einer solchen Säure

$c_5$) 0-40 Gew.-% eines Epoxygruppen enthaltenden Monomeren,

$c_6$) 0-5 Gew.-% sonstiger radikalisch polymerisierbaren Monomerer,

mit der Maßgabe, daß die Komponente (C) kein Olefinhomopolymerisat ist.

Als erste bevorzugte Gruppe sind die sogenannten Ethylen-Propylen-(EPM)- bzw. Ethylen-Propylen-Dien-(EPDM)-Kautschuke zu nennen, die vorzugsweise ein Verhältnis von Ethylen- zu Propyleneinheiten im Bereich von 40:60 bis 90:10 aufweisen.

Die Mooney-Viskositäten (MLI + 4/100 °C) solcher, vorzugsweise unvernetzter, EPM- bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100 °C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere $c_2$) für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo-(5.2.1.0.2.6)-3,8-decadien oder deren Mischungen genannt. Bevorzugt werden Hexa-1,5-dien-5-Ethylidennorbornen und Dicyclopentadien. Der Diengehalt der EPDM-Kautschuke beträgt vorzugsweise 0,5 bis 50, insbesondere 2 bis 20 und besonders bevorzugt 3 bis 15 Gew.-%, bezogen auf das Gesamtgewicht des Olefinpolymerisats.

EPM- bzw. EPDM-Kautschuke können vorzugsweise auch mit reaktiven Carbonsäuren oder deren Derivaten gepfropft sein. Hier seien vor allem Acrylsäure, Methacrylsäure und deren Derivate sowie Maleinsäureanhydrid genannt.

Eine weitere Gruppe bevorzugter Olefinpolymerisate sind Copolymere von $\alpha$-Olefinen mit 2-8 C-Atomen, insbesondere des Ethylens, mit $C_1$-$C_{18}$-Alkylestern der Acrylsäure und/oder Methacrylsäure.

Grundsätzlich eignen sich alle primären und sekundären $C_1$-$C_{18}$-Alkylester der Acrylsäure oder Methacrylsäure, doch werden Ester mit 1-12 C-Atomen, insbesondere mit 2-10 C-Atomen bevorzugt.

Beispiele hierfür sind Methyl-, Ethyl-, Propyl-, n-, i-Butyl- und 2-Ethylhexyl-, Octyl- und Decylacrylate bzw. die entsprechenden Ester der Methacrylsäure. Von diesen werden n-Butylacrylat und 2-Ethylhexylacrylat besonders bevorzugt.

Der Anteil der Methacrylsäureester und Acrylsäureester $c_3$) an den Olefinpolymerisaten beträgt 0-60, vorzugsweise 10-50 und insbesondere 30-45 Gew.-%.

Anstelle der Ester $c_3$) oder zusätzlich zu diesen können in den Olefinpolymerisaten auch säurefunktionelle und/oder latent säurefunktionelle Monomere ethylenisch ungesättigter Mono- oder Dicarbonsäuren $c_4$) oder Epoxygruppen aufweisende Monomere $c_5$) enthalten sein.

Als Beispiele für Monomere $c_4$) seien Acrylsäure, Methacrylsäure, tertiäre Alkylester dieser Säuren, insbesondere tert.-Butylacrylat und Dicarbonsäuren wie Maleinsäure und Fumarsäure oder Derivate dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit bis zu 20 C-Atomen, insbesondere Maleinsäureanhydrid und tertiäre $C_1$-$C_{12}$-Alkylester der vorstehend genannten Säuren, insbesondere tert.-Butylacrylat und tert.-Butylmethacrylat angeführt.

Die säurefunktionellen bzw. latent säurefunktionellen Monomeren und die Epoxygruppen-enthaltenden Monomeren werden vorzugsweise durch Zugabe von Verbindungen der allgemeinen Formeln I-IV zum Monomerengemisch in die Olefinpolymerisate eingebaut.

$R_1C(COOR_2) = C(COOR_3)R_4$ (I)

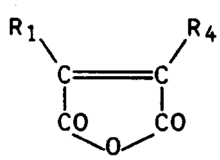

(II)

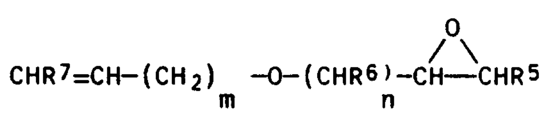

(III)

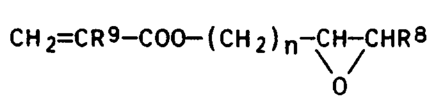

(IV)

wobei die Reste $R^1$ - $R^9$ Wasserstoff oder Alkylgruppen mit 1 bis 6 C-Atomen darstellen und m eine ganze Zahl von 0 bis 20 und n eine ganze Zahl von 0 bis 10 ist.

Bevorzugt für $R^1$ - $R^7$ ist Wasserstoff, für m der Wert 0 oder 1 und für n der Wert 1. Die entsprechenden Verbindungen sind Maleinsäure, Fumarsäure, Maleinsäureanhydrid, $c_4$) bzw. Alkenylglycidylether oder Vinylglycidylether $c_5$).

Bevorzugte Verbindungen der Formeln I, II, III und IV sind Maleinsäure und Maleinsäureanhydrid als Komponente $c_4$) und Epoxygruppen-enthaltende Ester der Acrylsäure und/oder Methacrylsäure, wobei Glycidylacrylat und Glycidylmethacrylat (als Komponente $c_5$) besonders bevorzugt werden.

Der Anteil der Komponenten $c_4$) bzw. $c_5$) beträgt jeweils 0,07 bis 40 Gew.-%, insbesondere 0,1 bis 20 und besonders bevorzugt 0,15 bis 15 Gew.-%, bezogen auf das Gesamtgewicht der Olefinpolymerisate.

Besonders bevorzugt sind Olefinpolymerisate aus

50 bis 98,9 insbesondere 60 bis 95 Gew.% Ethylen,

0,1 bis 20, insbesondere 0,15 bis 15 Gew.% Glycidylacrylat und/oder Glycidylmethacrylat, Acrylsäure und/oder Maleinsäureanhydrid,

1 bis 45, insbesondere 10 bis 35 Gew.% n-Butylacrylat und/oder 2-Ethylhexylacrylat.

Weitere bevorzugte Ester der Acryl- und/oder Methacrylsäure sind die Methyl-, Ethyl-, Propyl- und i-Butylester.

Als sonstige Monomere $c_6$) kommen z.B. Vinylester und Vinylether in Betracht.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur.

Der Schmelzindex der Ethylencopolymeren liegt im allgemeinen im Bereich von 1 bis 80 g/10 min (gemessen bei 190 °C und 2,16 kg Belastung).

Außer den vorstehenden bevorzugten kautschukelastischen Polymerisaten auf Basis von Olefinen eignen sich als Elastomere (C) beispielsweise die folgenden Polymerisate.

In erster Linie sind hier Emulsionspolymerisate zu nennen, deren Herstellung z.B. in Houben-Weyl, Methoden der organischen Chemie, Band XII. I (1961) sowie bei Blackley in der Monographie "Emulsion Polymerisation" beschrieben wird.

Grundsätzlich können statistisch aufgebaute Elastomere oder aber solche mit einem Schalenaufbau eingesetzt werden. Der schalenartige Aufbau wird durch die Zugabereihenfolge der einzelnen Monomeren bestimmt.

Als Monomere für die Herstellung des Kautschukteils der Elastomeren seien Acrylate wie n-Butylacrylat und 2-Ethylhexylacrylat, entsprechende Methacrylate, Butadien und Isopren sowie deren Mischungen genannt. Diese Monomeren können mit weiteren Monomeren wie Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0 °C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20 °C) am Aufbau des Elastomeren beteiligt, so werden diese im allgemeinen durch Polymerisation von Styrol, Acrylnitril, Methacrylnitril, $\alpha$-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel

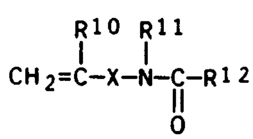

eingeführt werden können,

wobei die Substituenten folgende Bedeutung haben können:

- $R^{10}$ Wasserstoff, oder eine $C_1$-$C_4$-Alkylgruppe,
- $R^{11}$ Wasserstoff, eine $C_1$-$C_8$-Alkylgruppe oder eine Arylgruppe, insbesondere Phenyl,
- $R^{12}$ Wasserstoff, eine $C_1$-$C_{10}$-Alkyl-, eine $C_6$-$C_{12}$-Arylgruppe oder $OR^{13}$,
- $R^{13}$ eine $C_1$-$C_8$-Alkyl- oder $C_6$-$C_{12}$-Arylgruppe, die gegebenenfalls mit O- oder N-haltigen Gruppen substituiert sein können,
- X eine chemische Bindung, eine $C_1$-$C_{10}$-Alkylen- oder $C_6$-$C_{12}$-Arylengruppe oder

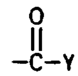

Y O-Z- oder NH-Z und

Z eine $C_1$-$C_{10}$-Alkylen- oder $C_6$-$C_{12}$-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentodienylacrylat sowie die in der EP-A 50 265 beschriebenen Verbindungen.

Ferner können auch sogenannten pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine Doppelbindung mit etwa gleicher Geschwindigkeit wie die übrigen Monomeren polymerisiert, während der restliche Teil der Doppelbindungen deutlich langsamer polymerisiert. Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Komponente (C) bis zu 5 Gew.%, vorzugsweise nicht mehr als 3 Gew.%, bezogen auf (C).

Im folgenden seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| C/1 | Buta-1,3-dien, Isopren, n-Butylacrylat, Ethylhexylacrylat oder deren Mischungen | Styrol, Acrylnitril, Methylmethacrylat |
| C/2 | wie A aber unter Mitverwendung von Vernetzern | wie A |
| C/3 | wie A oder B | n-Butylacrylat, Ethylacrylat, Methylacrylat, Buta-1,3-dien, Isopren, Ethylhexylacrylat |
| C/4 | wie A oder B | wie A oder C aber unter Mitverwendung von Monomeren mit reaktiven Gruppen wie hierin beschrieben |
| C/5 | Styrol, Acrylnitril, Methylmethacrylat oder deren Mischungen | erste Hülle aus Monomeren wie unter A und B für den Kern beschrieben zweite Hülle wie unter A oder C für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere (C) können auch nach anderen üblichen Verfahren, z.B. durch Suspensionspolymerisation, hergestellt werden.

Die erfindungsgemäßen Formmassen enthalten als Komponente D) 0,05 bis 15, vorzugsweise 0,25 bis 10 und insbesondere 1 bis 10 Gew.-% eines Polyethylens mit einer Dichte von 0,94 bis 0,98 g/cm$^3$ oder eines Polypropylens mit einem mittleren Molekulargewicht ($\overline{M}_w$ = Gewichtsmittel) von 100 000 bis 2 000 000, vorzugsweise 300 000 bis 1 000 000 und insbesondere 400 000 bis 800 000.

Enthalten die erfindungsgemäßen Formmassen die Komponente E), so weisen diese 0,05 bis 10, vorzugsweise 0,25 bis 10 und insbesondere 1 bis 5 Gew.% der Komponente D) auf.

Bevorzugte Komponente D) ist Polyethylen mit einer hohen Dichte von 0,94 bis 0,98, bevorzugt 0,95 bis 0,96 und insbesondere 0,951 bis 0,958 g/cm$^3$.

Der Schmelzindex MFI beträgt im allgemeinen weniger als 5 g/10 min bevorzugt weniger als 3 g/10 min bei 190 °C und einer Belastung von 21,6 kg (bestimmt nach DIN 53 735).

Der Schmelzflußindex entspricht dabei der Menge an Polymerisat, die innerhalb von 10 Minuten aus der nach DIN 53 735 genormten Prüfvorrichtung bei einer Temperatur von 190 °C und unter einem Gewicht von 21,6 kg ausgepreßt wird.

Die Herstellung derartiger Polyolefine erfolgt üblicherweise durch Niederdruckpolymerisation mit metallhaltigen Katalysatoren, beispielsweise mit Hilfe von titan- und aluminiumhaltigen Ziegler-Katalysatoren, oder im Falle des Polyethylens auch durch Phillips-Katalysatoren auf der Basis von chromhaltigen Verbindungen. Die Polymerisationsreaktion kann dabei mit den in der Technik üblichen Reaktoren, sowohl in der Gasphase, in Lösung oder auch in einer Aufschlämmung durchgeführt werden. Das Polyethylen oder Polypropylen kann bei der Herstellung der erfindungsgemäßen Polymermischung sowohl als Grieß als auch als Granulat verwendet werden. Es können auch Mischungen des Polyethylens mit Polypropylen eingesetzt werden, wobei das Mischungsverhältnis beliebig ist.

Ferner kann es von Vorteil sein, den roten Phosphor B) in Form eines Konzentrates mit D) einzusetzen.

Als weiteren Bestandteil können die erfindinngsgemäßen Formmassen 0 bis 60, vorzugsweise 1 bis 50, insbesondere 10 bis 40 und ganz besonders 20 bis 30 Gew.% eines faser- oder teilchenförmigen Füllstoffes (Komponente (E)) oder deren Mischungen enthalten.

Bevorzugte faserförmige Verstärkungsstoffe (Komponente (E)) sind Kohlenstoffasern, Kaliumtitanatwhisker, Aramidfasern und besonders bevorzugt Glasfasern. Bei der Verwendung von Glasfasern können diese zur besseren Verträglichkeit mit dem thermoplastischen Polyamid (A) mit einer Schlichte und einem Haftvermittler ausgerüstet sein. Im allgemeinen haben die verwendeten Glasfasern einen Durchmesser im Bereich von 6 bis 20 $\mu$m.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe eignen sich amorphe Kieselsäure, Magnesiumcarbonat (Kreide), Kaolin (insbesondere kalzinierter Kaolin), gepulverter Quarz, Glimmer, Talkum, Feldspat und insbesondere Calciumsilikate wie Wollastonit.

Bevorzugte Kombinationen von Füllstoffen sind z.B. 20 Gew.% Glasfasern mit 15 Gew.% Wollastonit und 15 Gew.% Glasfasern mit 15 Gew.% Wollastonit.

Neben den wesentlichen Komponenten A) bis D) und gegebenenfalls E) können die erfindungsgemäßen Formmassen übliche Zusatzstoffe und Verarbeitungshilfsmittel enthalten. Deren Anteil beträgt im allgemeinen bis zu 20, vorzugsweise bis zu 10 Gew.%, bezogen auf das Gesamtgewicht der Komponenten (A) bis (D).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe und Pigmente und Weichmacher.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe und Mischungen dieser Verbindungen, vorzugsweise in Konzentrationen bis zu 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Gleit- und Entformungsmittel, die in der Regel in Mengen bis zu 1 Gew.% der thermoplastischen Masse zugesetzt werden, sind Stearinsäure, Stearylalkohol, Stearinsäurealkylester und -amide sowie Ester des

Pentaerythrits mit langkettigen Fettsäuren. Es können auch Salze des Calciums, Zinks oder Aluminiums der Stearinsäure sowie Dialkylketone (Stearon® der Firma Henkel) eingesetzt werden.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Zinns, Magnesiums, Mangans und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion wird das Extrudat abgekühlt und zerkleinert.

Erfindungsgemäße Massen können auch durch einen Pultrusionsvorgang hergestellt werden, wie er in der EP-A-56 703 beschrieben ist. Dabei wird der Glasfaserstrang mit der Polymermasse durchtränkt und anschließend abgekühlt und zerkleinert. Die Glasfaserlänge ist in diesem Fall identisch mit der Granulatlänge und liegt zwischen 3 und 20 mm.

Die erfindungsgemäßen Formmassen zeichnen sich durch ihre gleichbleibenden mechanischen Eigenschaften aus, die durch einen verbesserten Abrieb bei gleichzeitig guter Schlagzähigkeit erzielt werden.

Zusätzlich weisen sie eine gute Flammbeständigkeit, Kriechstromfestigkeit und Phosphorstabilität auf.

Infolge dieses Eigenschaftsspektrums eignen sich die aus den erfindungsgemäßen Formmassen herstellbaren Formkörper besonders für elektrische und elektronische Bauteile, z.B. Elektromotorteile (Motorschutzschalter, Leistungsschütze), Elektroheizgeräte oder Gehäuseteile für Hochspannungsschalter. Glasfaserverstärkte Formkörper werden vor allem als Stecker, Steckverbindungen oder Leitungsbuchsen im Telekommunikationsbereich verwendet.

Beispiele

Zur Herstellung der erfindinngsgemäßen Formmassen wurden folgende Komponenten eingesetzt:

Komponente (A)

Polyamid-6.6 (Polyhexamethylenadipinsäureamid) mit einer Viskositätszahl von 135, entsprechend einer relativen Viskosität $\eta_{rel}$ von 2,4 °C (gemessen in 96 gew.%iger $H_2SO_4$ als 0,5 gew.%ige Lösung nach ISO 307).

Komponente (B)

Roter Phosphor der mittleren Teilchengröße ($d_{50}$) von 45 µm.

Komponente (C)

Ein Olefinpolymerisat aus
60 Gew.-% Ethylen
35 Gew.-% n-Butylacrylat
4,3 Gew.-% Acrylsäure
0,7 Gew.-% Maleinsäureanhydrid
mit einem MFI von 10 g/10 min bei 190 °C und 2,16 kg Belastung.

Komponente (D)

Polyethylen mit einem mittleren Molekulargewicht $\overline{M}_w$ (Gewichtsmittel) von 450 000, der MFI betrug 2 g/10 min (190 °C und 21,6 kg Belastung) und die Dichte: 0,954 g/cm$^3$.

Komponente (E)

Glasfasern mit einem Durchmesser von 10 µm.

Die Komponenten wurden auf einem Zweischneckenextruder bei 290 bis 300 °C abgemischt und in ein Wasserbad extrudiert.

Nach Granulierung und Trocknung wurden auf einer Spritzgußmaschine Prüfkörper gespritzt und geprüft.

Das Brandverhalten wurde nach UL 94 an 1/16 Zollstäben geprüft, die Klassifizierung V- (oder HB) bedeutet hierbei, daß die Probe bis zur Halterung durchbrennt.

Die Izod-Schlagzähigkeit $a_n$ wurde nach DIN 53 453 und die Schädigungsarbeit $w_{50}$ nach DIN 53 443, Teil 1 bestimmt.

Zur Messung der Phosphorstabilitäten wurden Prüfkörper in einem Wasserbad bei 60 °C belassen, wobei nach 10 Tagen eine Probeentnahme zur Bestimmung der wasserlöslichen Phosphorverbindungen mittels AAS erfolgte.

Die Bestimmung der Kriechstromfestigkeit (CTI) erfolgte nach DIN 112, ASTM-D 3638.

Zur Bestimmung der Verschleißrate $W_{m/s}$ wurde die Meßeinrichtung gemäß Abbildung 1 verwendet.

Ein Prüfkörper ($\phi$ 3 mm) wurde auf einen Prüfgrundkörper (120 x 14 x 10 mm) mit einer mittleren Flächenpressung P ($F_N$) von 2 N/mm$^2$ gedrückt. Die Bewegungsfrequenz f betrug 3 Hz, die Bewegungsamplitude $\Delta X_s = \pm 2$ mm. Die Lastspielzahl LW betrug 150 000, was einer Gleitstrecke von s = 1 km entsprach.

Prüfkörper und Grundkörper bestanden aus den gleichen Zusammensetzungen gemäß Tabelle 1, in der die Ergebnisse der Messungen aufgeführt sind.

Tabelle

| Versuch Nr. | 1* | 2* | 3* | 4 | 5 |
|---|---|---|---|---|---|
| Komponente A [Gew.-%] | 62,1 | 66,6 | 60,6 | 60,6 | 60,6 |
| B | 4,4 | 4,4 | 4,4 | 4,4 | 4,4 |
| C | 6,0 | - | - | 3,0 | 5,0 |
| D | - | - | 6,0 | 3,0 | 1,0 |
| E | 27,5 | 27,5 | 27,5 | 27,5 | 27,5 |
| F (ZnO) | - | 1,5 | 1,5 | 1,5 | 1,5 |
| Verschleißrate $W_{m/s}$ [mg/km] | 33,0 | 3,2 | 0,0 | 0,5 | 0,2 |
| Brandverhalten UL 94 [1/16"] | V-0 | V-0 | V- | V-0 | V-0 |
| Schlagzähigkeit $a_n$ [kJ/m$^2$], 23°C | 45 | 35 | 34 | 43 | 44 |
| Schädigungsarbeit $W_{50}$ [Nm], 23°C | 2,6 | 1,1 | 1,0 | 2,5 | 2,5 |
| löslicher Phosphor [ppm/10 d] | 40 | 10 | 12 | 10 | 11 |
| Kriechstromfestigkeit CTI [V] | 600 | 500 | 550 | 600 | 600 |

* zum Vergleich

## Patentansprüche

**1.** Flammgeschützte thermoplastische Formmassen, enthaltend

A) 10 bis 98,45 Gew.-% eines thermoplastischen Polyamids,

B) 1 bis 30 Gew.-% roten oder schwarzen Phosphor, welcher gegebenenfalls oberflächlich mit niedermolekularen flüssigen Substanzen oder mit Oligomeren oder polymeren Verbindungen beschichtet ist oder in der roten Modifikation als Konzentrat eingesetzt wird,

C) 0,5 bis 30 Gew.-% eines kautschukelastischen Polymerisates, mit der Maßgabe, daß die Komponente C) kein Olefinhomopolymerisat ist,

D) 0,05 bis 15 Gew.-% eines Polyethylens mit einer Dichte von 0,94 bis 0,98 g/cm$^3$ oder eines Polypropylens mit einem mittleren Molekulargewicht $\overline{M}_w$ von 100 000 bis 2 000 000 oder deren Mischungen

E) 0 bis 60 Gew.-% eines faser- oder teilchenförmigen Füllstoffes.

**2.** Flammgeschützte thermoplastische Formmassen nach Anspruch 1, enthaltend

A) 10 bis 97,45 Gew.%,

B) 1 bis 30 Gew.%,

C) 0,5 bis 30 Gew.%,

D) 0,05 bis 10 Gew.% und

E) 1 bis 50 Gew.%.

**3.** Flammgeschützte thermoplastische Formmassen nach den Ansprüchen 1 bis 4, in denen die Komponente D) aus einem Polyethylen mit einer Dichte von 0,95 bis 0,96 g/cm$^3$ aufgebaut ist.

**4.** Flammgeschützte thermoplastische Formmassen nach den Ansprüchen 1 bis 3, in denen die Komponente D) aus einem Polypropylen mit einem mittleren Molekulargewicht von 300 000 bis 1 000 000 aufgebaut ist.

**5.** Flammgeschützte thermoplastische Formmassen nach den Ansprüchen 1 bis 4, in denen die Komponente C) ein Olefincopolymerisat ist, welches aus

$c_1$) 40 bis 100 Gew.-% mindestens eines $\alpha$-Olefins mit 2-8 C-Atomen

$c_2$) 0 bis 50 Gew.-% eines Diens

$c_3$) 0 bis 45 Gew.-% eines primären oder sekundären $C_1$-$C_{12}$-Alkylesters der Acrylsäure oder Methacrylsäure oder Mischungen derartiger Ester,

$c_4$) 0 bis 40 Gew.-% eines säurefunktionellen und/oder eines latent säurefunktionellen Monomeren einer ethylenisch ungesättigten Mono- oder Dicarbonsäure,

$c_5$) 0 bis 40 Gew.-% eines Epoxygruppen enthaltenden Monomeren und

$c_6$) 0 bis 5 Gew.-% sonstiger radikalisch polymerisierbarer Monomeren

aufgebaut ist.

**6.** Verwendung der flammgeschützten thermoplastischen Formmassen gemäß den Ansprüchen 1 bis 5 zur Herstellung von Fasern, Folien und Formkörpern.

**7.** Formkörper, erhältlich aus flammgeschützten thermoplastischen Formmassen gemäß den Ansprüchen 1 bis 5.

## Claims

**1.** A flameproofed thermoplastic molding material containing

A) from 10 to 98.45% by weight of a thermoplastic polyamide,

B) from 1 to 30% by weight of red or black phosphorus which may be coated on the surface with low molecular weight liquid substances or with oligomeric or polymeric compounds or which, in the red modification, is used as a masterbatch,

C) from 0.5 to 30% by weight of an elastomeric polymer, with the proviso that component C) is not an olefin homopolymer,

D) from 0.05 to 15% by weight of a polyethylene having a density of from 0.94 to 0.98 g/cm$^3$ or of a polypropylene having an average molecular weight $M_w$ of from 100,000 to 2,000,000 or a mixture thereof

and

E) from 0 to 60% by weight of a fibrous or particulate filler.

**2.** A flameproofed thermoplastic molding material as claimed in claim 1, containing
from 10 to 97.45% by weight of A),
from 1 to 30% by weight of B),
from 0.5 to 30% by weight of C),
from 0.05 to 10% by weight of D) and
from 1 to 50% by weight of E).

**3.** A flameproofed thermoplastic molding material as claimed in claim 1 or 2, in which component D) is composed of a polyethylene having a density of from 0.95 to 0.96 g/cm$^3$.

**4.** A flameproofed thermoplastic molding material as claimed in any of claims 1 to 3, in which component D) is composed of a polypropylene having an average molecular weight of from 300,000 to 1,000,000.

**5.** A flameproofed thermoplastic molding material as claimed in any of claims 1 to 4, in which component C) is an olefin copolymer which is composed of
$c_1$) from 40 to 100% by weight of one or more $\alpha$-olefins of 2 to 8 carbon atoms,
$c_2$) from 0 to 50% by weight of a diene,
$c_3$) from 0 to 45% by weight of a primary or secondary $C_1$-$C_{12}$-alkyl aster of acrylic acid or methacrylic acid or a mixture of such esters,
$c_4$) from 0 to 40% by weight of an ethylenically unsaturated mono- or dicarboxylic acid as a monomer having acid functional and/or latent acid functional groups,
$c_5$) from 0 to 40% by weight of a monomer containing epoxy groups and
$c_6$) from 0 to 5% by weight of other monomers which can undergo free radical polymerization.

**6.** Use of a flameproofed thermoplastic molding material as claimed in any of claims 1 to 5 for the production of fibers, films and moldings.

**7.** A molding obtainable from a flameproofed thermoplastic molding material as claimed in any of claims 1 to 5.

**Revendications**

**1.** Masses à mouler thermoplastiques ignifugées contenant
A) 10 à 98,45% en poids d'un polyamide thermoplastique,
B) 1 à 30% en poids de phosphore rouge ou noir, qui est éventuellement enduit en surface de substances liquides de faible poids moléculaire ou d'oligomères, ou de composés polymères ou qui est introduit en concentré sous la forme de la variété rouge,
C) 0,5 à 30% en poids d'un polymère élastique caoutchouteux, à condition que le composant C) ne soit pas un homopolymère d'oléfine,
D) 0,05 à 15% en poids d'un polyéthylène ayant une densité comprise entre 0,94 et 0,98 g/cm$^3$ ou d'un polypropylène de masse moléculaire moyenne $\overline{M}_w$ comprise entre 100 000 et 2 000 000, ou de leurs mélanges,
E) 0 à 60% en poids d'une charge fibreuse ou particulaire.

**2.** Masses à mouler thermoplastiques ignifugées selon la revendication 1, contenant
A) 10 à 97,45% en poids,
B) 1 à 30 % en poids,
C) 0,5 à 30 % en poids,
D) 0,05 à 10 % en poids et
E) 1 à 50 % en poids.

**3.** Masses à mouler thermoplastiques ignifugées selon la revendication 1 ou 2, dans lesquelles le composant D) est constitué d'un polyéthylène de densité comprise entre 0,95 et 0,96 g/cm$^3$.

**4.** Masses à mouler thermoplastiques ignifugées selon l'une quelconque des revendications 1 à 3, dans lesquelles le composant D) est constitué d'un polypropylène de masse moléculaire moyenne comprise entre 300 000 et 1 000 000.

**5.** Masses à mouler thermoplastiques ignifugées selon l'une quelconque des revendications 1 à 4, dans lesquelles le composant C) est un copolymère d'oléfine, qui est constitué de

$C_1$) 40 à 100% en poids d'au moins une $\alpha$-oléfine ayant 2 à 8 atomes de carbone,

$C_2$) 0 à 50% en poids d'un-diène,

$C_3$) 0 à 45% en poids d'un acrylate ou méthacrylate d'alkyle en $C_1$-$C_{12}$ primaire ou secondaire ou de mélanges de tels esters,

$C_4$) 0 à 40% en poids d'un monomère à fonction acide et/ou à fonction acide latente d'un acide mono- ou dicarboxylique éthyléniquement insaturé,

$C_5$) 0 à 40% en poids d'un monomère contenant un groupe époxy et

$C_6$) 0 à 5% en poids d' autres monomères polymérisables par voie radicalaire.

**6.** Utilisation des masses à mouler thermoplastiques ignifugées selon l'une quelconque des revendications 1 à 5 pour préparer des fibres, des feuilles et des pièces moulées.

**7.** Pièce moulée, pouvant être obtenue à partir de masses à mouler thermoplastiques ignifugées selon les revendications 1 à 5.

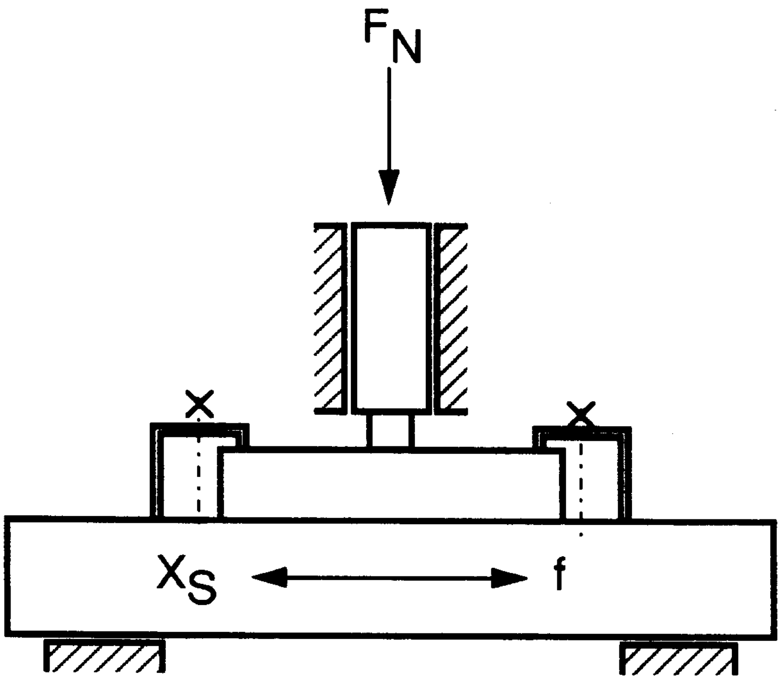
F
N
x
x
X
S
f